(19) Europäisches Patentamt
European Patent Office
Office européen des brevets

(11) Veröffentlichungsnummer : **0 350 030 B1**

(12) # EUROPÄISCHE PATENTSCHRIFT

(45) Veröffentlichungstag der Patentschrift :
**19.11.92 Patentblatt 92/47**

(21) Anmeldenummer : **89112359.8**

(22) Anmeldetag : **06.07.89**

(51) Int. Cl.[5] : **C08F 226/10,** C08F 220/28, G02B 1/04, A61L 27/00, // (C08F226/10, 220:28, 246:00), (C08F220/28, 226:10, 246:00)

(54) **Hydrophile Copolymere, Verfahren zu ihrer Herstellung und ihre Verwendung.**

(30) Priorität : **08.07.88 CS 4954/88**
**20.04.89 CS 2451/89**

(43) Veröffentlichungstag der Anmeldung :
**10.01.90 Patentblatt 90/02**

(45) Bekanntmachung des Hinweises auf die Patenterteilung :
**19.11.92 Patentblatt 92/47**

(84) Benannte Vertragsstaaten :
**DE FR GB IT SE**

(56) Entgegenhaltungen :
**EP-A- 0 187 652**
**DE-A- 2 503 755**
**US-A- 3 787 519**

(73) Patentinhaber : **CESKOSLOVENSKA AKADEMIE VED**
**Narodni 3**
**Praha 1 (CS)**

(72) Erfinder : **Vacik, Jiri, Ing., CSc.**
**Mechenická 18**
**Praha 4 (CS)**
Erfinder : **K delková, Jana, Ing.**
**Hradecká 7**
**Praha 3 (CS)**

(74) Vertreter : **Patentanwälte Beetz sen. - Beetz jun. Timpe - Siegfried - Schmitt-Fumian- Mayr**
**Steinsdorfstrasse 10**
**W-8000 München 22 (DE)**

EP 0 350 030 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neuartige hydrophile Copolymere, Verfahren zu ihrer Herstellung sowie ihre Verwendung, insbesondere für Kontakt- und Intraokularlinsen.

Für verschiedene medizinische Zwecke, die Herstellung von Kontaktlinsen und andere Anwendungszwecke sind bereits zahlreiche Copolymere bekannt, die jedoch meistens nur ungenügende mechanische Eigenschaften oder unerwünschte extrahierbare Anteile aufweisen.

In Anwendungsfällen, wo ein großer Wert auf gute mechanische Eigenschaften gelegt wird und ein Wassergehalt von etwa 40 Masse-% ausreichend ist, hat sich Poly(2-hydroxyethylmethacrylat) (Poly(HEMA)) bewährt.

Es wurden ferner bereits zahlreiche Polymere zum Beispiel für die Herstellung von weichen Kontaktlinsen angegeben (vgl. US-A-2 976 576, 3 220 960, 3 260 945, GB-A-1 601 087). Bei einer Reihe von Applikationen werden stark quellbare Materialien verlangt, die oft auch einen niedrigen Schubmodul bei genügender Dehnbarkeit aufweisen müssen. Es wurden deshalb gering vernetzte Copolymere des stark hydrophilen 1-Vinyl-2-pyrrolidons mit Alkylmethylmethacrylat entwickelt (GB-A-1 514 810), die geeignete mechanische Eigenschaften sowie hohe Quellbarkeit aufweisen. Diese Copolymere haben jedoch einen unerwünschten extrahierbaren Anteil. Außerdem hat Methylmethacrylat einen hohen Dampfdruck, weshalb solche Polymerisationssysteme nicht erfolgreich zum Beispiel im Schleudergußverfahren verwendet werden können.

Der Erfindung liegt die Aufgabe zugrunde, hydrophile Copolymere auf der Basis von 1-Vinyl-2-pyrrolid(in)on, ein Verfahren zu ihrer Herstellung sowie ihre Verwendung, insbesondere für Kontakt- und Intraokularlinsen, anzugeben.

Die Aufgabe wird anspruchsgemäß gelöst. Vorteilhafte Ausführungsformen sind Gegenstand der abhängigen Ansprüche.

Die erfindungsgemäßen hydrophilen Copolymeren auf der Basis von 1-Vinyl-2- pyrrolidon und einem oder mehreren Vinylcomonomeren sowie gegebenenfalls eines Vernetzungsmittels sind gekennzeichnet durch Vinylcomonomereinheiten der allgemeinen Formel I,

$$\begin{array}{l} -CH_2-CR- \\ \qquad\quad | \\ \qquad\quad CO\!\left(O-CH_2-CH_2\right)_n O-CO-CH_3 \end{array} \qquad (I),$$

in der

R H oder $CH_3$

und

n 1, 2 oder 3

bedeuten.

Das erfindungsgemäße Verfahren zur Herstellung dieser Copolymeren beruht auf der vorzugsweise radikalisch initiierten Copolymerisation von 1-Vinyl-2-pyrrolidon mit einem oder mehreren Vinylcomonomeren, wobei gemäß der Erfindung Vinylcomonomeren der allgemeinen Formel II

$$H_2C{=}CR-CO\!\left(O-CH_2-CH_2\right)_n O-CO-CH_3 \qquad (II),$$

eingesetzt werden, in der

R H oder $CH_3$

und

n 1, 2 oder 3,

bedeuten,

gegebenenfalls in Gegenwart eines oder mehrerer Vernetzungsmittel.

Die erfindungsgemäßen Copolymeren sind entsprechend durch diese Verfahrensweise erhältlich, vorzugsweise durch Copolymerisation

eines Comonomergemisches aus

(A) 5 bis 95 Masse-% 1-Vinyl-2-pyrrolidon
und
(B) 5 bis 95 Masse-% Vinylcomonomeren der Formel II wie oben definiert,
wobei die Gesamtmenge der Comonomerkomponenten A und B 100 Masse-% beträgt,
mit
(C) 0,01 bis 50 Masse-% eines oder mehrerer Vernetzungsmittel, bezogen auf die Gesamtmenge der Comonomerkomponenten A und B.

Besonders günstig geeignete Vinylcomonomere der Formel II sind 2-Acetoxyethylacrylat und 2-Acetoxyethoxyethylacrylat und insbesondere 2-Acetoxyethylmethacrylat und 2-Acetoxyethoxyethylmethacrylat.

Nach einer bevorzugten Ausführungsform wird das Vernetzungsmittel (C) in einer Menge von 0,01 bis 5 Masse-%, bezogen auf die Gesamtmenge der Comonomerkomponenten A und B, eingesetzt.

Die so erhältlichen hydrophilen Copolymeren eignen sich besonders gut für die Herstellung von Kontakt- und Intraokularlinsen.

Durch den höheren Gehalt der Comonomeren der allgemeinen Formel II wird der Gleichgewichts-Wassergehalt im resultierenden Copolymer in gequollenem Zustand verringert. Der Wassergehalt des resultierenden Copolymers liegt im Bereich von 5 bis 95 Masse-%.

Das Vernetzungsmittel C wird mit Vorteil ausgewählt unter mehrfunktionellen Estern und Amiden von Acrylsäure und Methacrylsäure, vorzugsweise 3,3-Ethylidenbis-(1-vinyl-2-pyrrolidon) und Diestern von Acrylsäure und Methacrylsäure mit entsprechenden Alkylenglycolen und Oligoalkylenglycolen. Dieses Vernetzungsmittel vermindert den Gehalt an wasserlöslichen 1-Vinyl-2-pyrrolidon-Homopolymeren.

Die radikalischen Initiatoren können ausgewählt werden unter Azoverbindungen, Peroxocarbonaten, Peroxiden, Peroxodisulfaten, Photoinitiatoren auf der Basis von Benzoinethern und ihren Derivaten, insbesondere Benzoinethylether, sowie Redoxinitiatorsystemen wie vorzugsweise Peroxodisulfat-Pyrosulfit, Peroxodisulfat-Alkylamine und Benzoylperoxid-Alkylamine.

Die Copolymerisation kann günstig auch in Gegenwart von polaren Lösungsmitteln, vorzugsweise von Glycerin, Glycolen und ihren Derivaten, Dimethylformamid, Dimethylsulfoxid, Dimethylazetamid, Diazetin, 2-Propanol und/oder Wasser durchgeführt werden.

In Gegenwart der angeführten Lösungsmittel oder ihrer Gemische werden Copolymersysteme mit wählbarem Lösungsmittelgehalt erhalten, die für das Gießverfahren geeignet sind. Das verwendete Lösungsmittel verhindert zwar eine unmittelbare mechanische Bearbeitung, beeinflußt jedoch die Quellungsdrücke positiv, was sich bei der Quellung des fertigen Produktes günstig bemerkbar macht.

Die Copolymerisation kann günstig bei gleichzeitiger Formgebung, z.B. durch Schleuderguß oder Gießen in offenen oder geschlossenen Formen durchgeführt werden. Auf diese Weise können mit Vorteil Kontakt- und Intraokularlinsen hergestellt werden.

Wird die Copolymerisation ohne Lösungsmittel durchgeführt, werden Blockcopolymere gewonnen, die danach mechanisch bearbeitet werden können. Ferner können manche Erzeugnisse direkt durch Block-Copolymerisation hergestellt werden.

Es ist ferner auch möglich und im Falle der Herstellung von höher quellbaren gedrehten Kontaktlinsen vorteilhaft, das Lösungsmittel und gegebenenfalls die wasserlöslichen niedermolekularen Anteile, die in unter Verwendung der oben angeführten polaren Lösungsmittel hergestellten Copolymeren enthalten sind, mit Wasser zu extrahieren und das Copolymer dann bis zur Massenkonstanz zu trocknen. Das so erhältliche Xerogel ist für die mechanische Bearbeitung ausgezeichnet geeignet. Das Trocknen kann dabei mit Vorteil in einer dampfgesättigten Atmosphäre bei einer Temperatur, die oberhalb der Glasübergangstemperatur Tg des hergestellten Copolymers liegt, durchgeführt werden.

Der Vorteil des erfindungsgemäßen Verfahrens gegenüber den bisher bekannten Verfahren zur Herstellung von Kontaktlinsen aus verschiedenen Typen von Xerogelen liegt darin, daß es nicht nur das vollkommene Auswaschen der niedermolekularen Anteile ermöglicht, sondern hinsichtlich der inneren Spannungen der Quervernetzungen bei der Polymerisation eine geordnetere Struktur erzielt wird, die beim Trocknen erhalten bleibt. Nach wiederholter Quellung einer Kontaktlinse aus einem so hergestellten Xerogel wird infolge der geordneten Struktur der Quervernetzungen ein Copolymer-Netzwerk ohne innere Spannungen erzielt.

Ein weiterer Vorteil dieses Verfahrens liegt darin, daß durch das Auswaschen der monomeren und niedermolekularen Anteile die Glasübergangstemperatur Tg erhöht wird, was für das Drehen und Polieren der Endform der Kontaktlinse günstig ist.

Die hydrophilen Copolymeren nach der vorliegenden Erfindung besitzen auch bei hoher Quellbarkeit gute mechanische Eigenschaften, enthalten eine nur minimale Menge wasserlöslicher extrahierbarer Anteile, sind resistent gegen unerwünschte Ablagerungen, sind bei der Siedetemperatur des Wassers (z.B. bei der Sterilisation entsprechender Linsen) beständig und gewährleisten einen genügend hohen Gleichgewichtswassergehalt.

Im folgenden wird die Erfindung anhand von Ausführungsbeispielen näher erläutert.
Der Elastizitätsmodul ist mit G, die Schubspannung mit τ und die Dehnung mit ε bezeichnet.

**Beispiel 1**

99,7 Masse-% eines Gemisches aus 80 Masse-% 1-Vinyl-2-pyrrolidon und 20 Masse-% 2-Acetoxyethylmethacrylat wurden mit 0,3 Masse-% 3,3′-Ethyliden-bis(1-vinyl-2-pyrrolidon) vermischt. Dieses Gemisch wurde mit 0,05 Masse-% 2,2′-Azobis(isobutyronitril), bezogen auf die Gesamtmasse der Monomeren, 16 h bei 60 °C polymerisiert. Das gewonnene Copolymer enthielt nach Quellung 63 Masse-% Wasser.

**Beispiel 2**

99,7 Masse-% eines Gemisches aus 70 Masse-% 1-Vinyl-2-pyrrolidon und 30 Masse-% 2-Acetoxyethylmethacrylat wurden mit 0,3 Masse-% 3,3′-Ethyliden-bis(1-vinyl-2-pyrrolidon) vermischt. Dieses Gemisch wurde mit 0,05 Masse-% 2,2′-Azobis(isobutyronitril) 16 h bei 60 °C polymerisiert. Das gewonnene Copolymer enthielt nach Quellung 77,5 Masse-% Wasser bei einem Elastizitätsmodul G von 0,0681 MPa, einer Schubspannung τ von 0,15 MPa und einer Dehnung ε von 130 %.

**Beispiel 3**

99,7 Masse-% eines Gemisches aus 60 Masse-% 1-Vinyl-2-pyrrolidon und 40 Masse-% 2-Acetoxyethylmethacrylat wurden mit 0,3 Masse-% 3,3′-Ethyliden-bis(1-vinyl-2-pyrrolidon) vermischt. Dieses Gemisch wurde mit 0,05 Masse-% 2,2′-Azobis(isobutyronitril), bezogen auf die Gesamtmasse der Monomeren, 16 h bei 60 °C polymerisiert. Das gewonnene Endprodukt enthielt nach Quellung 68,4 Masse-% Wasser bei G = 0,1123 MPa, τ = 0,18 MPa und ε = 120 %.

**Beispiel 4**

99,7 Masse-% eines Gemisches aus 50 Masse-% 1-Vinyl-2-pyrrolidon und 50 Masse-% 2-Acetoxyethylmethacrylat wurden mit 0,3 Masse-% 3,3′-Ethyliden-bis(1-vinyl-2-pyrrolidon) vermischt. Dieses Gemisch wurde mit 0,05 Masse-% 2,2′-Azobis(isobutyronitril), bezogen auf die Gesamtmasse der Monomeren, 16 h bei 60 °C polymerisiert. Das gewonnene Endprodukt enthielt nach Quellung 58,8 Masse-% Wasser bei G = 0,1172 MPa, τ = 0,18 MPa und ε = 93 %.

**Beispiel 5**

99,9 Masse-% eines Gemisches aus 80 Masse-% 1-Vinyl-2-pyrrolidon und 20 Masse-% 2-(2-Acetoxyethoxy)-ethylmethacrylat wurden mit 0,1 Masse-% 3,3′-Ethyliden-bis(1-vinyl-2-pyrrolidon) vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach Quellung 91,2 Masse-% Wasser.

**Beispiel 6**

99,7 Masse-% eines Gemisches aus 70 Masse-% 1-Vinyl-2-pyrrolidon und 30 Masse-% 2-(2-Acetoxyethoxy)-ethylmethacrylat wurden mit 0,3 Masse-% 3,3′-Ethylidenbis(1-vinyl-2-pyrrolidon) vermischt. Dieses Gemisch wurde mit 0,1 Masse-% Diisopropylperoxocarbonat, bezogen auf die Gesamtmasse der Monomeren, 16 h bei 60 °C polymerisiert. Das Endprodukt enthielt nach Quellung 84,6 Masse-% Wasser.

**Beispiel 7**

99,7 Masse-% eines Gemisches aus 60 Masse-% 1-Vinyl-2-pyrrolidon und 40 Masse-% 2-(Acetoxyethoxy)-ethylmethacrylat wurden mit 0,3 Masse-% Ethylenglycoldimethacrylat vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach Quellung 80,5 Masse-% Wasser.

**Beispiel 8**

99,7 Masse-% eines Gemisches aus 50 Masse-% 1-Vinyl-2-pyrrolidon und 50 Masse-% 2-(A

cetoxyethoxy)-ethylmethacrylat wurden mit 0,3 Masse-% 3,3′-Ethylidenbis(1-vinyl-2-pyrrolidon) vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach Quellung 73,3 Masse-% Wasser.

**Beispiel 9**

99,7 Masse-% eines Gemisches aus 60 Masse-% 1-Vinyl-2-pyrrolidon und 40 Masse-% 2-(Acetoxy)-ethylmethacrylat wurden mit 0,3 Masse-% 3,3′-Ethylidenbis(1-vinyl-2-pyrrolidon) vermischt. Es wurde eine 80-masse-%ige Lösung dieses Gemisches in Diacetin hergestellt; diese Lösung wurde mit 0,05 Masse-% 2,2′-Azobis(isobutyronitril), bezogen auf die Gesamtmasse der Monomeren, 16 h bei 60 °C polymerisiert. Das gewonnene Copolymer enthielt nach der Quellung 71,8 Masse-% Wasser.

**Beispiel 10**

98,5 Masse-% eines Gemisches aus 60 Masse-% 1-Vinyl-2-pyrrolidon und 40 Masse-% 2-(2-Acetoxyethoxy)-ethylmethacrylat wurden mit 1,5 Masse-% Diethylenglycoldimethacrylat vermischt. Es wurde eine 80 masse-%ige Lösung dieses Gemisches in Diacetin hergestellt; diese Lösung wurde mit 0,05 Masse-% 2,2′-Azobis(isobutyronitril), bezogen auf die Gesamtmasse der Monomeren, 16 h bei 60 °C polymerisiert. Das gewonnene Copolymer enthielt nach der Quellung 61 Masse-% Wasser.

**Beispiel 11**

99,7 Masse-% eines Gemisches aus 60 Masse-% 1-Vinyl-2-pyrrolidon und 40 Masse-% 2-(Acetoxybisethoxy)-ethylmethacrylat wurden mit 0,3 Masse-% Ethylenglycoldimethacrylat vermischt. Das Gemisch wurde 16 h bei 60 °C mit 0,05 Masse-% 2,2′-Azobis(isobutyronitril), bezogen auf die Gesamtmasse der Monomeren, polymerisiert. Das Endprodukt enthielt nach der Quellung 88,2 Masse-% Wasser.

**Beispiel 12**

99,7 Masse-% eines Gemisches aus 95 Masse-% 1-Vinyl-2-pyrrolidon und 5 Masse-% 2-(2-Acetoxyethoxy)-ethylmethacrylat wurden mit 0,3 Masse-% 3,3′-Ethylidenbis(1-vinyl-2-pyrrolidon) vermischt. Das Gemisch wurde mit 0,05 Masse-% 2,2′-Azobis(isobutyronitril), bezogen auf die Gesamtmasse der Monomeren, 16 h bei 60 °C polymerisiert. Das Endprodukt enthielt nach der Quellung 92,3 Masse-% Wasser.

**Beispiel 13**

98 Masse-% eines Gemisches aus 60 Masse-% 1-Vinyl-2-pyrrolidon und 40 Masse-% 2-(Acetoxy)-ethylmethacrylat wurden mit 2 Masse-% 3,3′-Ethylidenbis(1-vinyl-2-pyrrolidon) vermischt. Das Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach der Quellung 58,6 Masse-% Wasser.

**Beispiel 14**

50 Masse-% eines Gemisches aus 60 Masse-% 1-Vinyl-2-pyrrolidon und 40 Masse-% 2-(Acetoxy)-ethylmethacrylat wurden mit 50 Masse-% 3,3′-Ethylidenbis(1-vinyl-2-pyrrolidon) vermischt. Das Gemisch wurde mit 0,05 Masse-% 2,2′-Azobis(isobutyronitril), bezogen auf die Gesamtmasse der Monomeren, 16 h bei 60 °C polymerisiert. Das Endprodukt enthielt nach der Quellung 5,3 Masse-% Wasser.

**Beispiel 15**

99,7 Masse-% eines Gemisches aus 60 Masse-% 1-Vinyl-2-pyrrolidon und 40 Masse-% 2-(Acetoxy)-ethylacrylat wurden mit 0,3 Masse-% Diethylenglycoldimethacrylat vermischt. Das Gemisch wurde mit 0,1 Masse-% Diisopropylperoxocarbonat, bezogen auf die Gesamtmasse der Monomeren, 16 h bei 60 °C polymerisiert. Das erhaltene Copolymer enthielt nach der Quellung 85,2 Masse-% Wasser.

**Beispiel 16**

99,7 Masse-% eines Gemisches aus 70 Masse-% 1-Vinyl-2-pyrrolidon und 30 Masse-% 2-(2-Acetoxyethoxy)-ethylmethacrylat wurden mit 0,5 Masse-% Ethylenglycoldimethacrylat vermischt. Das Gemisch wurde mit 0,5 Masse-% Benzoinethylether, bezogen auf die Gesamtmasse der Monomeren, 15 min unter Einwirkung von UV-Strahlung polymerisiert. Das erhaltene Copolymer enthielt nach der Quellung 83,3 Masse-% Wasser.

**Beispiel 17**

99,5 Masse-% eines Gemisches aus 60 Masse-% 1-Vinyl-2-pyrrolidon und 40 Masse-% 2-(Acetoxy)-ethylmethacrylat wurden mit 0,5 Masse-% 3,3′-Ethylidenbis(1-vinyl-2-pyrrolidon) vermischt. Das Gemisch wurde mit 0,5 Masse-% Benzoinethylether, bezogen auf die Gesamtmasse der Monomeren, 15 min unter Einwirkung von UV-Strahlung polymerisiert. Das erhaltene Copolymer enthielt nach der Quellung 85,1 Masse-% Wasser.

**Beispiel 18**

99,5 Masse-% eines Gemisches aus 80 Masse-% 1-Vinyl-2-pyrrolidon und 20 Masse-% 2-(Acetoxy)-ethylmethacrylat wurden mit 0,5 Masse-% Ethylenglycoldimethacrylat vermischt. 80 Masse-% dieses Gemisches in N-Methylpyrrolidon wurden mit 0,5 Masse-% Benzoinethylether, bezogen auf die Gesamtmasse der Monomeren, 15 min unter Einwirkung von UV-Strahlung polymerisiert. Das erhaltene Copolymer enthielt nach der Quellung 80,8 Masse-% Wasser.

**Beispiel 19**

99,7 Masse-% eines Gemisches aus 40 Masse-% 1-Vinyl-2-pyrrolidon und 60 Masse-% 2-(2-Acetoxyethoxy)-ethylmethacrylat wurden mit 0,3 Masse-% 3,3′-Ethylidenbis(1-vinyl-2-pyrrolidon) vermischt. Das Gemisch wurde mit 0,05 Masse-% 2,2′-Azobis(isobutyronitril), bezogen auf die Gesamtmasse der Monomeren, 16 h bei 60 °C polymerisiert. Das gewonnene Copolymer enthielt nach der Quellung 69 Masse-% Wasser.

**Beispiel 20**

99,7 Masse-% eines Gemisches aus 45 Masse-% 1-Vinyl-2-pyrrolidon und 55 Masse-% 2-(Acetoxy)-ethylmethacrylat wurden mit 0,3 Masse-% 3,3′-Ethylidenbis(1-vinyl-2-pyrrolidon) vermischt. Das Gemisch wurde mit 0,05 Masse-% 2,2′-Azobis(isobutyronitril), bezogen auf die Gesamtmasse der Monomeren, 16 h bei 60 °C polymerisiert. Das gewonnene Copolymer enthielt nach der Quellung 56,5 Masse-% Wasser.

**Beispiel 21**

99,7 Masse-% eines Gemisches aus 30 Masse-% 1-Vinyl-2-pyrrolidon und 70 Masse-% 2-(Acetoxy)-ethylmethacrylat wurden mit 0,3 Masse-% 3,3′-Ethylidenbis(1-vinyl-2-pyrrolidon) vermischt. Das Gemisch wurde mit 0,5 Masse-% Benzoinethylether, bezogen auf die Gesamtmasse der Monomeren, 15 min unter Einwirkung von UV-Strahlung polymerisiert. Das erhaltene Copolymer enthielt nach der Quellung 45 Masse-% Wasser.

**Beispiel 22**

99,7 Masse-% eines Gemisches aus 30 Masse-% 1-Vinyl-2-pyrrolidon und 70 Masse-% 2-(Acetoxy)-ethylmethacrylat wurden mit 0,3 Masse-% 3,3′-Ethylidenbis(1-vinyl-2-pyrrolidon) vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach der Quellung 37 Masse-% Wasser.

**Beispiel 23**

99,7 Masse-% eines Gemisches aus 20 Masse-% 1-Vinyl-2-pyrrolidon und 80 Masse-% 2-(Acetoxyethoxy)-ethylmethacrylat wurden mit 0,3 Masse-% 3,3′-Ethylidenbis(1-vinyl-2-pyrrolidon) vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach der Quellung 60 Masse-% Wasser.

**Beispiel 24**

99,7 Masse-% eines Gemisches aus 10 Masse-% 1-Vinyl-2-pyrrolidon und 90 Masse-% 2-(Acetoxyethoxy)-ethylmethacrylat wurden mit 0,3 Masse-% 3,3′-Ethylidenbis(1-vinyl-2-pyrrolidon) vermischt. Dieses Gemisch wurde mit 0,05 Masse-% 2,2′-Azobis(isobutyronitril), bezogen auf die Gesamtmasse der Monomeren, 16 h bei 60 °C polymerisiert. Das Endprodukt enthielt nach der Quellung 56 Masse-% Wasser.

**Beispiel 25**

99,7 Masse-% eines Gemisches aus 10 Masse-% 1-Vinyl-2-pyrrolidon und 90 Masse-% 2-(Acetoxy)-ethylmethacrylat wurden mit 0,3 Masse-% 3,3′-Ethylidenbis(1-vinyl-2-pyrrolidon) vermischt. Das Gemisch wurde mit 0,5 Masse-% Benzoinethylether, bezogen auf die Gesamtmasse der Monomeren, 15 min unter Einwirkung von UV-Strahlung polymerisiert. Das erhaltene Copolymer enthielt nach der Quellung 29 Masse-% Wasser.

**Beispiel 26**

99,7 Masse-% eines Gemisches aus 5 Masse-% 1-Vinyl-2-pyrrolidon und 95 Masse-% 2-(Acetoxyethoxy)-ethylmethacrylat wurden mit 0,3 Masse-% 3,3′-Ethylidenbis(1-vinyl-2-pyrrolidon) vermischt. Dieses Gemisch wurde mit 0,1 Masse-% 2,2′-Azobis(isobutyronitril), bezogen auf die Gesamtmasse der Monomeren, 16 h bei 60 °C polymerisiert. Das Endprodukt enthielt nach der Quellung 54 Masse-% Wasser.

**Patentansprüche**

1. Hydrophile Copolymere auf der Basis von 1-Vinyl-2-pyrrolidon und Vinylcomonomeren sowie gegebenenfalls eines Vernetzungsmittels,
   **gekennzeichnet durch**
   Vinylcomonomereinheiten der allgemeinen Formel I,

$$\begin{array}{l} -CH_2-CR- \\ \qquad\quad | \\ \qquad CO(O-CH_2-CH_2)_nO-CO-CH_3 \end{array} \qquad (I),$$

   in der bedeuten:
   R H oder $CH_3$
   und
   n 1, 2 oder 3.

2. Copolymere nach Anspruch 1, erhältlich durch vorzugsweise radikalisch initiierte Copolymerisation von 1-Vinyl-2-pyrrolidon mit einem oder mehreren Vinylcomonomeren der allgemeinen Formel II,

$$H_2C=CR-CO(O-CH_2-CH_2)_nO-CO-CH_3 \qquad (II),$$

   in der bedeuten:
   R H oder $CH_3$
   und
   n 1, 2 oder 3,
   gegebenenfalls in Gegenwart eines oder mehrerer Vernetzungsmittel.

3. Copolymere nach Anspruch 1 oder 2, erhältlich durch Copolymerisation

eines Comonomergemisches aus
(A) 5 bis 95 Masse-% 1-Vinyl-2-pyrrolidon
und
(B) 5 bis 95 Masse-% Vinylcomonomeren der Formel II gemäß Anspruch 2,
wobei die Gesamtmenge der Comonomerkomponenten A und B 100 Masse-% beträgt,
mit
(C) 0,01 bis 50 Masse-% und vorzugsweise 0,01 bis 5 Masse-% eines oder mehrerer Vernetzungsmittel, bezogen auf die Gesamtmenge der Comonomerkomponenten A und B.

**4.** Copolymere nach einem der Ansprüche 1 bis 3, erhältlich unter Verwendung von 2-Acetoxyethyl(meth)acrylat und/oder 2-Acetoxyethoxyethyl(meth)acrylat als Vinylcomonomere und von 3,3′-Ethylidenbis(1-vinyl-2-pyrrolidon) und/oder einem oder mehreren Alkylenglycoldi(meth)acrylaten als Vernetzungsmittel.

**5.** Verfahren zur Herstellung von hydrophilen Copolymeren auf der Basis von 1-Vinyl-2-pyrrolidon und Vinylcomonomeren, insbesondere nach einem der Ansprüche 1 bis 4, gekennzeichnet durch vorzugsweise radikalisch initiierte Copolymerisation von 1-Vinyl-2-pyrrolidon mit einem oder mehreren Vinylcomonomeren der allgemeinen Formel II,

$$H_2C=CR-CO\!\left(O-CH_2-CH_2\right)_n O-CO-CH_3 \qquad (II),$$

in der bedeuten:
R H oder $CH_3$
und
n 1, 2 oder 3,
gegebenenfalls in Gegenwart eines oder mehrerer Vernetzungsmittel.

**6.** Verfahren nach Anspruch 5, gekennzeichnet durch Copolymerisation eines Comonomergemischs aus
(A) 5 bis 95 Masse-% 1-Vinyl-2-pyrrolidon
und
(B) 5 bis 95 Masse-% -Vinylcomonomeren der Formel II gemäß Anspruch 5,
wobei die Gesamtmenge der Comonomerkomponenten A und B 100 Masse-% beträgt,
mit
(C) 0,01 bis 50 Masse-% und vorzugsweise 0,01 bis 5 Masse-% eines oder mehrerer Vernetzungsmittel, bezogen auf die Gesamtmenge der Comonomerkomponenten A und B.

**7.** Verfahren nach Anspruch 5 oder 6, gekennzeichnet durch Verwendung eines oder mehrerer Vernetzungsmittel (C), die ausgewählt sind unter mehrfunktionellen Estern und Amiden von Acrylsäure und Methacrylsäure, vorzugsweise 3,3′-Ethylidenbis(1-vinyl-2-pyrrolidon), und Diestern von Acrylsäure und Methacrylsäure mit entsprechenden Alkylenglycolen und Oligoalkylenglycolen.

**8.** Verfahren nach einem der Ansprüche 5 bis 7, gekennzeichnet durch Verwendung von radikalischen Initiatoren, die ausgewählt sind unter Azoverbindungen, Peroxiden, Peroxocarbonaten, Peroxodisulfaten, Photoinitiatoren auf der Basis von Benzoinethern und ihren Derivaten sowie Redoxinitiatorsystemen, vorzugsweise Peroxodisulfat/Pyrosulfit, Peroxodisulfat/Alkylamine und Benzoylperoxid/Alkylamine.

**9.** Verfahren nach einem der Ansprüche 5 bis 8, gekennzeichnet durch Copolymerisation in Gegenwart eines oder mehrerer polarer Lösungsmittel, vorzugsweise von Glycerin, Glycolen und/oder deren Derivaten, Wasser, Dimethylformamid, Dimethylsulfoxid, Dimethylacetamid, Diacetin und/oder Isopropanol.

**10.** Verfahren nach einem der Ansprüche 5 bis 9, dadurch gekennzeichnet, daß die Copolymerisation bei gleichzeitiger Formgebung, vorzugsweise durch Schleuderguß oder durch Gießen in offenen oder geschlossenen Formen, durchgeführt wird.

**11.** Verwendung der hydrophilen Copolymeren nach einem der Ansprüche 1 bis 4 zur Herstellung von Kontaktlinsen und Intraokularlinsen.

**12.** Kontaktlinsen und Intraokularlinsen, dadurch gekennzeichnet, daß sie ein hydrophiles Copolymer nach einem der Ansprüche 1 bis 4 enthalten oder aus ihm bestehen.

## Claims

**1.** Hydrophilic copolymers on the basis of 1-vinyl-2-pyrrolidone and of vinylic comonomers, as well as optionally a crosslinking agent, characterized by vinylic comonomer units of the general formula I

$$\begin{array}{l} -CH_2-CR- \\ \qquad\quad | \\ \qquad\quad CO-(O-CH_2-CH_2)_n-O-CO-CH_3 \end{array} \qquad (I),$$

wherein R is H or$CH_3$, and n is 1, 2 or 3.

**2.** Copolymers according to claim 1, obtainable by preferably radically initiated, copolymerization of 1-vinyl-2-pyrrolidone with one or more vinylic comonomers of the general formula II,

$$H_2C=CR-CO-(O-CH_2-CH_2)_n-O-CO-CH_3 \qquad (II),$$

wherein R is H or $CH_3$, and n is 1, 2 or 3, optionally in the presence of one or more crosslinking agents.

**3.** Copolymers according to claim 1 or 2, obtainable by copolymerization of a comonomer mixture comprising
(A) 5 to 95 % by weight of 1-vinyl-2-pyrrolidone, and
(B) 5 to 95 % by weight of vinylic comonomers of the formula II specified in claim 2,
wherein the total amount of the comonomer components A and B is 100 % by weight,
with
(C) 0.01 to 50 % by weight and preferably 0.01 to 5 % by weight of one or more crosslinking agents, based on the total amount of the comonomer components A and B.

**4.** Copolymers according to one of claims 1 to 3, obtainable by using 2-acetoxyethyl(meth)acrylate and/or 2-acetoxyethoxyethyl(meth)acrylate as vinylic comonomers and 3,3′-ethylidene-bis(1-vinyl-2-pyrrolidone) and/or one or more alkylene glycol di(meth)acrylates as crosslinking agents.

**5.** Method for producing the hydrophilic copolymers on the basis of 1-vinyl-2-pyrrolidone and vinylic comonomers, particularly according to one of claims 1 to 4, characterized by preferably radically initiated, copolymerization of 1-vinyl-2-pyrrolidone with one or more vinylic comonomers of the general formula II,

$$H_2C=CR-CO-(O-CH_2-CH_2)_n-O-CO-CH_3 \qquad (II),$$

wherein R is H or $CH_3$, and n is 1, 2 or 3, optionally in the presence of one or more crosslinking agents.

**6.** The method according to claim 5, characterized by copolymerization of a comonomer mixture comprising
(A) 5 to 95 % by weight of 1-vinyl-2-pyrrolidone,
(B) 5 to 95 % by weight of vinylic comonomers of the general formula II as specified in claim 5,
wherein the total amount of the comonomer components A and B is 100 % by weight,
(C) 0.01 to 50 % by weight and preferably 0.01 to 5 % by weight of one or more crosslinking agents, based on the total amount of the comonomer components A and B.

**7.** The method according to claim 5 or 6, characterized by the use of one or more crosslinking agents (C) selected from multifunctional esters or amides of acrylic acid and methacrylic acid, preferably 3,3′-ethylidene-bis(1-vinyl-2-pyrrolidone), and diesters of acrylic acid and methacrylic acid with corresponding alkylene glycols and oligoalkylene glycols.

**8.** The method according to one of claims 5 to 7, characterized by the use of radical initiators selected from

azo compounds, peroxides, peroxocarbonates, persulfates, photoinitiators on the basis of benzoin ethers or their derivatives, and redox initiation systems, preferably peroxosulfate/pyrosulfate, peroxodisulfate/alkylamine, and benzoyl peroxide/alkylamine.

**9.** The method according to one of claims 5 to 8, wherein the copolymerization is carried out in the presence of one or more polar solvents, preferably in the presence of glycerol, glycols and/or their derivatives, water, dimethylformamide, dimethylsulfoxide, dimethylacetamide, diacetin and/or isopropanol.

**10.** The method according to one of claims 5 to 9, wherein the copolymerization is carried out with simultaneous molding advantageously by centrifugal casting or casting in open or closed molds.

**11.** Use of the hydrophilic copolymers according to one of claims 1 to 4 for the preparation of contact lenses and intraocular lenses.

**12.** Contact lenses and intraocular lenses, characterized in that they comprise or consist of a hydrophilic copolymer according to one of claims 1 to 4.

## Revendications

**1.** Copolymères hydrophiles sur la base du 1-vinyl-2-pyrrolidone et de comonomères vinyliques, et éventuellement d'un agent de réticulation, caractérisés par des unités de comonomères vinyliques de la formule générale I,

$$\begin{array}{l} -CH_2-CR- \\ \qquad\quad | \\ \qquad\quad CO-(O-CH_2-CH_2)_n-O-CO-CH_3 \end{array} \qquad (I),$$

dans laquelle
R signifie H ou $CH_3$, n étant 1, 2 ou 3.

**2.** Copolymères selon la revendication 1, pouvant être obtenus par une copolymérisation, de préférence par initiation radicalaire, du 1-vinyl-2-pyrrolidone avec un ou plusieurs comonomères vinyliques de la formule générale II,

$$H_2C=CR-CO-(O-CH_2-CH_2)_n-O-CO-CH_3 \qquad (II),$$

dans laquelle
R signifie H ou $CH_3$, n étant 1, 2 ou 3, éventuellement en présence d'un ou plusieurs agents de réticulation.

**3.** Copolymères selon la revendication 1 ou 2, pouvant être obtenus par la copolymérisation d'un mélange de comonomères qui consiste de
(A) 5 à 95 % en masse du 1-vinyl-2-pyrrolidone, et
(B) 5 à 95 % en masse de comonomères vinyliques de la formule II selon la revendication 2,
la quantité totale des composants comonomériques A et B étant 100 % en masse, avec
(C) 0,01 à 50 % en masse et de préférence 0,01 à 5 % en masse d'un ou plusieurs agents de réticulation, par rapport à la quantité totale des composants comonomériques A et B.

**4.** Copolymères selon l'une quelconque des revendications 1 à 3, pouvant être obtenus en utilisant le méthacrylate de 2-acetoxyéthyl et/ou le méthacrylate de 2-acetoxyethoxyéthyl en tant que comonomères vinyliques, et le 3,3'-ethylidènebis(1-vinyl-2-pyrrolidone) et/ou un ou plusieurs diméthacrylates d'alkylèneglycols en tant qu'agents de réticulation.

**5.** Procédé de préparation des copolymères hydrophiles sur la base du 1-vinyl-2-pyrrolidone et de comonomères vinyliques, particulièrement selon l'une quelconque des revendications 1 à 4, caractérisé par une copolymérisation, de préférence par initiation radicalaire, du 1-vinyl-2-pyrrolidone avec un ou plusieurs comonomères vinyliques de la formule générale II,

$$H_2C{=}CR{-}CO{-}(O{-}CH_2{-}CH_2)_n{-}O{-}CO{-}CH_3 \qquad (II),$$

dans laquelle
R signifie H ou $CH_3$, n'étant 1, 2 ou 3, éventuellement en présence d'un ou plusieurs agents de réticulation.

**6.** Procédé selon la revendication 5, caractérisé par la copolymérisation d'un mélange de comonomères, qui consiste de
(A) 5 à 95 % en masse du 1-vinyl-2-pyrrolidone, et
(B) 5 à 95 % de comonomères vinyliques de la formule II selon la revendication 5,
la quantité totale des composants comonomériques A et B étant 100 % en masse, avec
(C) 0,01 à 50 % en masse et de préférence 0,01 à 5 % en masse d'un ou plusieurs agents de réticulation, par rapport à la quantité totale des composants comonomériques A et B.

**7.** Procédé selon la revendication 5 ou 6, caractérisé par l'utilisation d'un ou plusieurs agents de réticulation (C), choisis parmi les esters et les amides polyfonctionnels de l'acide acrylique et de l'acide méthacrylique, de préférence le 3,3'-éthylidènebis(1-vinyl-2-pyrrolidone), et les diesters de l'acide acrylique et de l'acide méthacrylique avec les alkylèneglycols et les oligoalkylèneglycols correspondants.

**8.** Procédé selon l'une quelconque des revendications 5 à 7, caractérisé par l'utilisation d'initiateurs radicalaires choisis parmi les composés azo, les peroxides, les peroxocarbonates, les peroxodisulfates, de photoinitiateurs sur la base des éthers de benzoine et leurs dérivés, et aussi de systèmes d'initiateurs dits rédox, de préférence peroxodisulfate/pyrosulfite, peroxodisulfate/alkylamine et benzoylperoxide/alkylamine.

**9.** Procédé selon l'une quelconque des revendications 5 à 8, caractérisé par copolymérisation en présence d'un ou plusieurs solvants polaires, de préférence de la glycérine, de glycols et/ou de leurs dérivés, de l'eau, du diméthylformamide, du diméthylsulfoxide, du diméthylacetamide, de la diacétine et/ou de l'isopropanol.

**10.** Procédé selon l'une quelconque des revendications 5 à 9, caractérisé par le fait que la copolymérisation est effectuée avec formage simultanée, de préférence par coulée centrifuge ou par coulée dans des moules ouvertes ou fermées.

**11.** Utilisation des copolymères hydrophiles selon l'une quelconque des revendications 1 à 4 pour la production de lentilles à contact et de lentilles intraoculaires.

**12.** Lentilles à contact et lentilles intraoculaires, caractérisées par le fait qu'elles contiennent un copolymère hydrophile selon l'une quelconque des revendications 1 à 4 ou en consistent entièrement.